# EUROPÄISCHE PATENTSCHRIFT

(11) **EP 4 075 214 B1**
(45) Veröffentlichungstag und Bekanntmachung des Hinweises auf die Patenterteilung: **24.07.2024**
(21) Anmeldenummer: 22167634.9
(22) Anmeldetag: 11.04.2022
(51) Int. Cl.: G05B 19/042

(54) **VERFAHREN ZUR WARTUNG VON ANLAGEN, INSBESONDERE MASCHINEN IN WARENLAGERN**
METHOD FOR MAINTENANCE OF INSTALLATIONS, IN PARTICULAR MACHINES IN STORAGE
PROCÉDÉ DE MAINTENANCE DES INSTALLATIONS, EN PARTICULIER DES MACHINES DANS LES ENTREPÔTS

(30) Priorität: 15.04.2021 DE 102021109512
(43) Veröffentlichungstag der Anmeldung: 19.10.2022
(73) Patentinhaber: Dematic GmbH, 63150 Heusenstamm (DE)
(72) Erfinder: Jarr, Daniel, 63067 Offenbach (DE); Hartz, Joshua, 63571 Gelnhausen (DE)
(74) Vertreter: Moser Götze & Partner Patentanwälte mbB

(56) Entgegenhaltungen:
- EP-A1- 2 703 920
- EP-A1- 3 534 593
- US-A- 5 598 572
- US-A1- 2006 228 005
- US-A1- 2014 028 441

## Beschreibung

Die Erfindung betrifft ein Verfahren zur Wartung von Anlagen, insbesondere Maschinen in Warenlagern nach Anspruch 1.

Warenhäuser bzw.- Warenlager und deren Einrichtungen müssen regelmäßig inspiziert, gewartet bzw. kontrolliert werden, u. a. auch aufgrund gesetzlicher Bestimmungen.

Dazu werden zumeist für die Inbetriebnahme, Testing, sowie Wartung und Instandhaltung der Maschinenausrüstung in einem Lager kabelgebundene Tablets oder Computer verwendet, wobei z. B. ein Servicetechniker das Tablet in einen Stecker in der Nähe der Maschine stecken muss, die Maschine anhand ihrer ID auswählen und dann seine Arbeit beginnen kann, um eine Maschine manuell zu überbrücken oder zu steuern.

Einige Anbieter verwenden bereits Funk- oder WiFi-basierte Verbindungen für das Service-Tablett. Deren Funktionsweise ist ansonsten ähnlich der kabelgebundenen Lösungen.

Die gesetzlichen Vorschriften (z. B. DGUV Vorschriften) schreiben vor, dass die zu steuernde Maschinenausrüstung für den Servicetechniker physisch sichtbar sein muss. Mit anderen Worten, es muss auch bei einem Fernzugriff über Laptop, Tablet, Smartphone etc. sichergestellt werden, dass der Techniker die Maschine im Blick hat bzw. diese sichtbar ist.

Diese Lösungen entsprechen daher nicht immer den Vorschriften, da es technisch nicht gewährleistet werden kann, dass der Servicetechniker bei Verwendung einer Funkverbindung tatsächlich die Maschine im Sichtfeld hat.

US 2009/0084657 A1 beschreibt ein modulares Fördersystem, das mehrere Fördermodule und mehrere drahtlose Maschinenkommunikationspunkte umfasst, die an den mehreren Fördermodulen angeordnet sind und dazu ausgelegt sind, drahtlos über ein Maschennetzwerk zu kommunizieren.

US 10,521,626 B2 offenbart ein Materialhandhabungssystem mit einem oder mehreren Untersystemen und eine oder mehrere Sensortafeln. Jede Sensortafel kann bestimmen, ob ein Modus-Steuerungs-Token sich in der Nähe der jeweiligen Sensortafel befindet. Wenn ein Modus-Steuerungs-Token in der unmittelbaren Nähe der jeweiligen Sensortafel ist, kann die Sensortafel ein Signal erzeugen, und wenn der Modus-Steuerungs-Token außerhalb der Nähe der jeweiligen Sensortafel ist, wird die Erzeugung des Signals gestoppt. Das Materialtransportsystem kann außerdem einen Prozessor enthalten, der es ermöglicht, dass mindestens ein Untersystem des Materialtransportsystems als Reaktion auf die generierten Signale aktiviert bzw. durch das Fehlen der Signale still gesetzt wird.

EP 1 449 041 B1 beschreibt die Möglichkeit eine Steuerung einer Maschine nur zu erlauben, wenn der Zugriff über einen vorgegebenen Accesspoint des Netzwerks erfolgt. Dann wird angenommen, dass der Servicetechniker sich im Umfeld befindet. Diese Vorgehensweise ist relativ ungenau.

EP 3 534 593 A1 beschreibt ein Verfahren zur Vergabe eines Bedienrechtes für eine über eine Steuerungsvorrichtung automatisierte Maschine, wobei das Bedienrecht von einer stationären Bedienvorrichtung an eine mobile Bedienvorrichtung übergeben wird, wobei für eine Prüfung, ob sich die mobile Bedienvorrichtung in einem zulässigen Bedienbereich der Maschine befindet, folgende Schritte ausgeführt werden: Mittels der mobilen Bedienvorrichtung wird die Übergabe des Bedienrechtes von der stationären Bedienvorrichtung auf die mobile Bedienvorrichtung angefragt, und dadurch wird die stationäre Bedienvorrichtung veranlasst ein Merkmal zur eindeutigen Identifizierung bereitzustellen. Das Merkmal wird von der mobilen Bedienvorrichtung registriert und an die stationäre Bedienvorrichtung zurückgemeldet. Damit wird eine Information zum Ort der mobilen Bedienvorrichtung in Bezug auf die stationäre Bedienvorrichtung erzeugt. Für die Übergabe des Bedienrechtes werden folgende Schritte ausgeführt: Die mobile Bedienvorrichtung beantragt das Bedienrecht und sendet das Merkmal an eine Verwaltungseinheit, die Verwaltungseinheit prüft anhand des Merkmals und einer Beziehungsvorschrift, ob das Merkmal von der stationären Bedienvorrichtung stammt und ob das Merkmal sendende mobile Bedienvorrichtung grundsätzlich zur Bedienung der Maschine freigegeben ist, und wenn die Prüfung erfolgreich war, wird das Bedienrecht auf die mobile Bedienvorrichtung übertragen.

Demgegenüber besteht die Aufgabe der vorliegenden Erfindung darin, ein Verfahren zur Wartung von Maschinen in Warenlagern bereitzustellen, bei dem die Sichtbarkeit der Maschine für den Servicetechniker sichergestellt ist oder zumindest mit sehr hoher Wahrscheinlichkeit gegeben ist.

Diese Aufgabe wird durch das in Anspruch 1 wiedergegebene Verfahren gelöst. Vorteilhafte Ausgestaltungen ergeben sich aus den Unteransprüchen und der Beschreibung.

Erfindungsgemäß ist erkannt worden, dass, wenn die Kontrollübernahme durch den mobilen Computer durch eine zentrale Steuerung nur zugelassen wird, wenn der Servicetechniker Sichtkontakt zur entsprechenden Anlage haben kann, wozu die Ermittlung der Position und/oder der Ausrichtung des mobilen Computers des Servicetechnikers zur jeweiligen Anlage über optische und/oder akustische Erkennung eines Fingerabdrucks der Anlage erfolgt, tatsächlich die Sichtbarkeit der Anlage durch eine Nähe des Servicetechnikers bzw. seines Arbeitsgerätes in Gestalt des mobilen Computers auf einfache Weise drahtlos sicherzustellen.

Zudem wird die Kontrollübernahme der Anlage erleichtert und beschleunigt, da sie automatisierbar ist.

Erfindungsgemäß erfolgt die akustische Erkennung mittels eines Mikrofons des mobilen Computers, das der zentralen Steuerung ermöglicht, einen in der zentralen Steuerung hinterlegten akustischen Fingerabdruck mit momentanen akustischen Aufnahmen der Geräusche der jeweiligen Anlage zu vergleichen. Mit anderen Worten, es wird mittels des/der eingebauten Mikrofons/Mirofone des mobilen Computers ein Geräusch der Anlage aufgenommen und dieses mit einem hinterlegten akustischen Fingerabdruck in der zentralen Steuerung verglichen. Daraus lässt sich dann einerseits die Anlage selbst identifizieren und andererseits der Abstand des mobilen Computers und bei Verwendung von mindestens zwei Mikrofonen auch eine Ausrichtung dessen zur jeweiligen Anlage ermitteln.

Wenn die akustische Erkennung mittels mindestens eines Mikrofons sowohl die Frequenz als auch die Amplitude der momentanen Geräusche der Anlage überwacht, kann auch sichergestellt werden, dass der zulässige Abstand von der Anlage eingehalten wird bzw. nicht verlassen wird.

Die Geräusche sind normale Betriebsgeräusche der Anlage.

Alternativ erfolgt die optische Erkennung mittels einer Kamera des mobilen Computers, die der zentralen Steuerung ermöglicht, einen in der zentralen Steuerung hinterlegten optischen Fingerabdruck mit momentanen optischen Aufnahmen von Mustern der jeweiligen Anlage zu vergleichen. Mit anderen Worten, es wird mittels der eingebauten Kameras des mobilen Computers ein Bild der Anlage aufgenommen und dieses mit einem hinterlegten optischen Fingerabdruck in der zentralen Steuerung verglichen. Daraus lässt sich dann einerseits die Anlage selbst identifizieren und andererseits der Abstand des mobilen Computers und bei Verwendung von mindestens zwei Kameras bzw. geeigneter Bildauswertung auch eine Ausrichtung dessen zur jeweiligen Anlage ermitteln.

Erfindungsgemäß bestehen die optischen Muster aus der Anlage selbst.

Sinnvollerwiese kann auch die Identifikation des Servicetechnikers mittels optischer und/oder akustischer Erkennung durchgeführt wird. So kann eine Bilderkennung oder Stimmmustererkennung erfolgen, um den Servicetechniker zu autorisieren. Auch diese Daten können in der zentralen Steuerung hinterlegt sein.

Mit anderen Worten, es werden die Möglichkeiten der optischen und/oder akustischen Erkennung verwendet, um die Wartung in einem Warenlager oder Distributionslager etc. zu beschleunigen, zu vereinfachen und sicherer zu machen.

Das fragliche Verfahren wird demgemäß in einem Warenlager bzw. einer Halle installiert bzw. ausgeführt.

Entsprechend stammen die fraglichen Anlagen aus dem Bereich Fördertechnik, Lagertechnik, Kommissioniertechnik und/oder Sortiertechnik.

Fördertechnik-Anlagen sind vorzugsweise jegliche Art von Förderern, insbesondere Rollenförderer, Bandförderer, Hängeförderer, mit und ohne Weichen und Ein- und/oder Ausschleusungen.

Lagertechnik- Anlagen umfassen vorzugsweise Regalbediengeräte, insbesondere Shuttles, Lifte für Güter und/oder Shuttles.

Kommissioniertechnik beinhaltet manuelle, automatisierte und/oder robotergestützte Kommissionierstationen und deren Steuerungen inkl. der Zu- und Abführungen.

Sortiertechnik umfasst neben Rundlaufsortern (Kippschalensorter, Querbandsorter, Bombaysorter, Pushtraysorter) und Linearsortern (slat and shoe sorter) auch Sequenziertechnik, wie Sortiertürme, Karusselle, mehrstufige Sortierkreisel etc.

Es wird also mittels der Erfindung mit hoher Wahrscheinlichkeit sichergestellt, dass der Servicetechniker Sichtkontakt auf die Anlage hat, weil er sich in einer bestimmten Position befindet, was durch eine Lokalisierung seines Arbeitsgeräts ermittelt wird. Nur wenn er sich z. B. in unmittelbarer Nähe der fraglichen Anlagen aus dem Bereich Fördertechnik, Lagertechnik, Kommissioniertechnik und/oder Sortiertechnik befindet, wird dann der Remotezugang freigegeben.

Erfindungsgemäß kann zusätzlich vorgesehen sein, dass aufgrund des ermittelten Standorts des mobilen Computers eine Auswahl von erreichbaren Anlagen zur Wartung vorausgewählt und dem Servicetechniker angeboten wird. Somit wird die Wartung deutlich beschleunigt. Es ist auch denkbar, dass eine Wartungsverbindung automatisch zu der nächstgelegenen Anlage erfolgt oder bei Verlassen des sichtbaren Bereichs getrennt wird.

Darüber hinaus ist es an dieser Stelle möglich anlagenspezifische Dokumentationen, System- und Anlagenhistorien abzurufen: So kann die Auswahl der abrufbaren Dokumente deutlich vereinfacht werden.

Auch eine Fehlerdokumentation seitens der Servicetechniker, sowie ein Remote-Support basierend auf einer vor-selektierten Auswahl von Experten/Kollegen kann hiermit anlagenspezifisch vereinfacht werden.

Einerseits kann eine Zugangskontrolle in der jeweiligen Anlage selbst integriert sein oder alternativ in dem mobilen Computer bzw. dessen Programmierung selbst hinterlegt sein. Weiterhin ist denkbar, dass die Ermittlung des Standorts des mobilen Computers mittels Diensten durch eine übergeordnete Steuerung erfolgt, wie sie ggf. bereits als Warenlagersteuerungssoftware vorliegt.

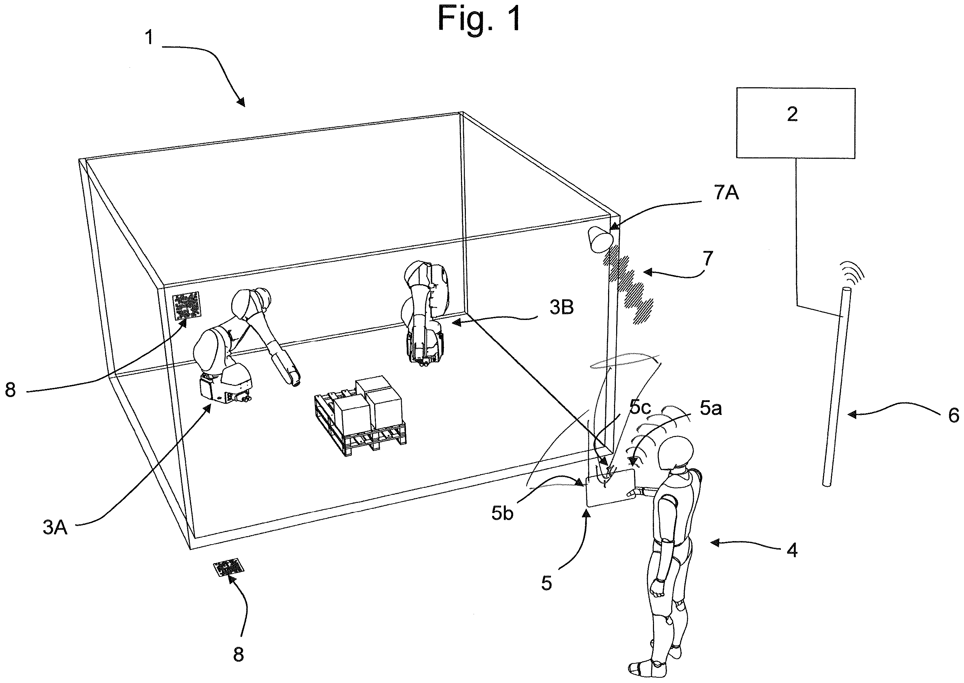

Weitere Details der Erfindung ergeben sich aus der nachfolgenden Beschreibung von Ausführungsbeispielen anhand der Zeichnung, in der
- Fig. 1: eine schematische Ansicht eines Warenlagers mit mehreren Fördertechnikmaschinen und einem Wartungstechniker zeigt.

In der Figur 1 ist ein als Ganzes mit 1 bezeichnetes Warenlager (Warehouse) schematisch dargestellt.

Das Warenlager 1 umfasst eine übergeordnete Steuerung 2 und eine Vielzahl von damit verbundenen Fördertechnikmaschinen 3A, B, die als Kommissionierroboter ausgebildet sind. Die zentrale Steuerung verfügt über ein WLAN-Funkmodul 6, das eine Kommunikation mit einem Servicetablet 5 (mobiler Computer) ermöglicht, das über ein entsprechendes Funkmodul 5a verfügt.

Die Anlage bzw. das Warenlager 1 verfügt sowohl über einen optischen als auch einen akustischen Fingerabdruck 7, 8.

Der optische Fingerabdruck 8 ist vorliegend ein in unmittelbarer Nähe der Fördertechnik sichtbar aufgebrachter 2D-Code, den das mit einer Kamera 5b ausgerüstete Servicetablet 5 erkennen bzw. auslesen kann.

In dem 2D Code ist z. B. der Anlagenteil und dessen Standort hinterlegt. Diese wird mit der zentralen Steuerung 2 ausgetauscht, die dann den Standort des Servicetablets 5 bzw. somit auch des Technikers 4 kennt.

Der akustische Fingerabdruck 7 ist vorliegend ein akustisches Signal 7, dass das mit einem Mikrophone 5c ausgerüstete Servicetablet 5 aufnehmen kann. Das Signal 7 wird vorliegend künstlich durch einen in unmittelbarer Nähe der Fördertechnik angeordneten Schallgenerator 7A erzeugt. Der Schall ist einzigartig für die Fördertechnik bzw. Fördertechnikmaschinen 3A, B und erlaubt so der zentralen Steuerung nach entsprechender Übermittlung die Zuordnung bzw. Bestimmung des Standorts des Servicetablets 5 bzw. somit auch des Technikers 4.

Sobald sich der Servicetechniker 4 also mit dem Servicetablet 5 in Sicht- und/oder Hörweite der Fördertechnikmaschinen 3A, B bzw. der Fingerabdrücke 7, 8 befindet, kann über die zentrale Steuerung 2 der Zugriff auf die Fördertechnik freigeben werden. Vorliegend erfolgt die Freigabe nur, wenn sowohl die akustische als auch optische Auswertung die unmittelbare Nähe zur zu wartenden Fördertechnikmaschine 3A ergibt.

Dazu muss sich die Fördertechnik im Sichtfeld der Kamera 5b oder innerhalb eines Radius in welchem das Audiosignal 7 noch definiert stark bzw. laut vom Mikrophone 5c aufgenommen wird, befinden. Dies ermöglicht dem Techniker 4 einen flexibleren Arbeitsraum und stellt dennoch Sichtbarkeit zur Anlage sicher. Er kann sich demnach innerhalb des Wartungsbereichs bewegen, diesen aber nicht verlassen.

Mittels der übergeordneten Steuerung 2 erfolgt eine Freigabe also nur, wenn aus den akustischen Signalen des Mikrophones 5c und deren Auswertung sich die unmittelbare Nähe zur Fördertechnik ergibt.

Analog kann die Freigabe auch nur erfolgen, wenn die Auswertung der Bilder von der Kamera 5b und deren Auswertung sich die unmittelbare Nähe zur Fördertechnik ergibt.

Die zentrale Steuerung 2 gibt die Freigabe nur, wenn der Vergleich von akustischer Signalstärke und vorgegebener Signalstärke oder Livebild der Kamera und hinterlegten Bildern in der Datenbank eine unmittelbare Nähe ergibt.

Auch bleibt die Freigabe nur bestehen bzw. erfolgt keine Sperrung, wenn sowie durch konstantes Überwachen der Amplitude des Signals 7 bzw. Scannen und Erkennen der Codes 8 der Standort des Wartungstechnikers 4 bzw. seines Tablets 5 sich nicht außerhalb des Wartungsbereichs bewegt.

Wenn der Techniker 4 also Zugang zu der Fördertechnikmaschine 3A bzw. deren Steuerung erlangen will, muss er sich nicht nur authentifizieren und anmelden, sondern auch in einem Bereich befinden, der einen Sichtkontakt auf die Fördertechnikmaschine 3A erlaubt.

Im vorliegenden Fall ist die nur dann gegeben, wenn er sich in der unmittelbaren Nähe bzw. Umgebung im Wartungsbereich der Maschine 3A befindet.

Diese Überprüfung und anschließende Freigabe erfolgt über die übergeordnete Steuerung 2 mittels der Positionsdaten des Tablets 5.

## Patentansprüche

1. Verfahren zur Wartung, Inbetriebnahme und Überprüfung von Anlagen in Warenlagern (1), wobei ein Servicetechniker (4) Sicht auf die jeweilige Anlage hat und mittels eines mobilen Computers (5) drahtlos Kontakt mit der Steuerung (2) der Anlage aufnimmt, um deren Kontrolle zu übernehmen, wobei die Kontrollübernahme durch den mobilen Computer durch eine zentrale Steuerung nur zugelassen wird, wenn der Servicetechniker Sichtkontakt zur entsprechenden Anlage haben kann, wozu die Ermittlung der Position und/oder der Ausrichtung des mobilen Computers des Servicetechnikers zur jeweiligen Anlage über optische und/oder akustische Erkennung eines Fingerabdrucks der Anlage erfolgt, wobei die akustische Erkennung mittels eines Mikrofons (5c) des mobilen Computers erfolgt, das der zentralen Steuerung ermöglicht, einen in der zentralen Steuerung hinterlegten akustischen Fingerabdruck mit momentanen akustischen Aufnahmen der normalen Betriebsgeräusche der jeweiligen Anlage zu vergleichen oder wobei die optische Erkennung mittels einer Kamera (5b) des mobilen Computers erfolgt, die der zentralen Steuerung ermöglicht, einen in der zentralen Steuerung hinterlegten optischen Fingerabdruck mit momentanen optischen Aufnahmen von Mustern aus der Anlage selbst mit der jeweiligen Anlage zu vergleichen.

2. Verfahren nach Anspruch 1, **dadurch gekennzeichnet, dass** die akustische Erkennung mittels des Mikrofons sowohl die Frequenz als auch die Lautstärke der momentanen Geräusche der Anlage überwacht.

3. Verfahren nach einem der vorhergehenden Ansprüche, **dadurch gekennzeichnet, dass** auch eine Identifikation des Servicetechnikers mittels optischer und/oder akustischer Erkennung durchgeführt wird.

4. Verfahren nach einem der vorhergehenden Ansprüche, **dadurch gekennzeichnet, dass** die Anlagen aus dem Bereich Fördertechnik, Lagertechnik Kommissioniertechnik und/oder Sortiertechnik stammen.

## Claims

1. Method for maintaining, commissioning and checking systems in warehouses (1), wherein a service technician (4) has a view of the respective system and makes wireless contact with the controller (2) of the system by means of a mobile computer (5) in order to take over control thereof, whereby the taking over of control by the mobile computer is permitted by a central controller only if the service technician can have visual contact with the corresponding system, for which purpose the determination of the position and/or the orientation of the mobile computer of the service technician with respect to the respective system is effected via optical and/or acoustic recognition of a fingerprint of the system, whereby the acoustic recognition is effected by means of a microphone (5c) of the mobile computer which enables the central controller to compare an acoustic fingerprint stored in the central controller with instantaneous acoustic recordings of the normal operating noises of the respective system or, whereby that the optical recognition is effected by means of a camera (5b) of the mobile computer which enables the central controller to compare an optical fingerprint stored in the central controller with instantaneous optical recordings of patterns with the respective system itself.

2. Method as claimed in claim 1, **characterised in that** the acoustic recognition by means of the microphone monitors both the frequency and the volume of the instantaneous noises of the system.

3. Method as claimed in any one of the preceding claims, **characterised in that** an identification of the service technician is also effected by means of optical and/or acoustic recognition.

4. Method as claimed in any one of the preceding claims, **characterised in that** the systems come from the field of conveying technology, storage technology, picking technology and/or sorting technology.

## Revendications

1. Procédé de maintenance, de mise en route et de contrôle d'installation dans des entrepôts (1), selon lequel
un technicien de service (4) a vue sur l'installation respective et prend contact avec la commande (2) de l'installation avec un ordinateur mobile (5) pour en prendre le contrôle,
la prise de contrôle avec l'ordinateur mobile n'est autorisée par une commande centrale que si le technicien de service peut avoir un contact à vue avec l'installation correspondante, et pour cela, on détermine la position et/ou l'orientation de l'ordinateur mobile du technicien de service par rapport à l'installation respective par reconnaissance optique et/ou acoustique d'une empreinte digitale de l'installation,
la reconnaissance acoustique se fait avec un micro (5c) de l'ordinateur mobile qui permet à la commande centrale de comparer l'empreinte digitale acoustique enregistrée dans la commande centrale avec la saisie acoustique instantanée des bruits de fonctionnement normaux de l'installation respective, ou
la reconnaissance optique se fait à l'aide d'une caméra (5b) de l'ordinateur mobile qui permet à la commande centrale de comparer une empreinte digitale optique enregistrée dans la commande centrale avec la saisie optique instantanée de motifs de l'installation même avec l'installation respective.

2. Procédé selon la revendication 1,
**caractérisé en ce que**
la reconnaissance acoustique avec le micro surveille à la fois la fréquence et l'intensité des bruits instantanés de l'installation.

3. Procédé selon l'une des revendications précédentes,
**caractérisé en ce que**
l'on identifie également le technicien de service avec une reconnaissance optique et/ou acoustique.

4. Procédé selon l'une des revendications précédentes,
**caractérisé en ce que**
les installations sont du domaine de la manutention, du stockage, de la commission et/ou du classement.
